# EUROPÄISCHE PATENTANMELDUNG

(11) **EP 4 707 623 A1**
(43) Veröffentlichungstag der Anmeldung: **11.03.2026**
(21) Anmeldenummer: 24199266.8
(22) Anmeldetag: 09.09.2024
(51) Int. Cl.: F16B 39/24, F16B 43/00, F16B 31/04

(54) **SCHRAUBENSICHERUNGSSCHEIBE**

(71) Anmelder: TV Innovation GmbH & Co. KG, 58553 Halver (DE)
(72) Erfinder: Volborth, Thomas, 58553 Halver (DE)
(74) Vertreter: Patentanwälte Dörner & Kötter PartG mbB

(57) **Zusammenfassung**

Die Erfindung betrifft eine Schraubensicherungsscheibe zur Anordnung zwischen einem Schraubenkopf einer Schraube und einer ebenen Unterlage, die ein Langloch aufweist, durch das die Schraube geführt ist, mit einer Scheibenoberseite (2) und einer der Unterlage zugewandten Scheibenunterseite (3), wobei der Scheibenkörper (1) konvex ausgebildet ist, dadurch gekennzeichnet, dass die Scheibenoberseite (2) des Scheibenkörpers (1) außen mit einem umlaufenden Steg (5) versehen ist.

## Beschreibung

Die Erfindung betrifft eine Schraubensicherungsscheibe zur Anordnung zwischen einem Schraubenkopf einer Schraube und einer ebenen Unterlage, die ein Langloch aufweist, durch das die Schraube geführt ist.

Schraubensicherungsscheiben haben die Aufgabe, Lockerungsvorgängen bei Schraubenverbindungen entgegenzuwirken. Solche Lockerungsvorgänge ergeben sich aus Vorspannkraftverlusten in den Schraubenverbindungen, welche als Folge von Setz- und/oder Kriechvorgängen bei den miteinander verschraubten Teilen auftreten.

Um derartigen Lockerungsvorgängen entgegenzutreten, weisen Schraubensicherungsscheiben eine federnde Wirkung auf, deren Federkraft derart zu bemessen ist, dass sie einen durch die Setz- und/oder Kriechvorgänge hervorgerufenen Vorspannkraftverlust soweit ausgleichen können, dass die für die Betriebssicherheit der Schraubverbindung erforderliche Klemmkraft erhalten bleibt.

In der Praxis kommen häufig Langloch-Schraubverbindungen zum Einsatz. Diese werden insbesondere bei der Montage verwendet, um Toleranzen unter den zu montierenden Bauteilen auszugleichen. Hierbei werden regelmäßig Spannscheiben gemäß DIN 6796 - 2009-08 verwendet, um die Schraubenverbindung gegenüber Lockern zu sichern. Für die Sicherung der Schraubenverbindung zusätzlich gegenüber selbsttätigem Losdrehen werden Keilscheibenpaare oder auch dicke Sperrkantscheiben eingesetzt.

Die besondere Herausforderung bei Langloch-Schraubverbindungen ist, dass das verwendete Schraubensicherungselement sich in der durch das Langloch unterbrochenen Auflagefläche nicht durchbiegen soll. Die Durchbiegung des Schraubensicherungselements würde dazu führen, dass die Scheibe nur eine linienförmige Auflagefläche zur Gegenlage hätte. Die Folge wäre, dass durch das Überschreiten der Grenzfließspannung der verspannten Werkstoffe überschritten würde und es zu erhöhten Setz- und Kriecherscheinungen kommen kann, die ein Lösen der Schraubverbindung zur Folge hätten.

Bei elektrischen Schraubverbindungen würde eine Durchbiegung des Schraubensicherungselements dazu führe, dass zusätzlich kein gleichförmiger Drucckegel der Schraubenverbindung bestehen würde, was eine Hemmung der Stromübertragungseigenschaften zur Folge hätte.

Um eine Durchbiegung der Schraubensicherungselemente zu vermeiden, wird die Dicke der Sicherungselemente derart dimensioniert, dass eine Durchbiegung im Bereich des Langloches unterbrochenen Auflagebereichs durch einen erhöhten Materialeinsatz möglichst gering ist. Häufig werden bei Langlochverbindungen sogar, um Oberflächenbeschädigungen durch das Eindrücken der Außendurchmesser zu verhindern, zusätzliche Unterlegscheiben verwendet. Eine solche Verbindung ist nicht nur sehr aufwendig; sie hat darüber hinaus auch den Nachteil von Eignungseinschränkungen aufgrund der erhöhten Setzbeträge durch die durch die weiteren Unterlegscheiben verursachten zusätzlichen Trennfugen.

Hier setzt die vorliegende Erfindung an. Der Erfindung liegt die Aufgabe zugrunde, eine Schraubensicherungsscheibe zur Anordnung zwischen einem Schraubenkopf einer Schraube und einer ebenen Unterlage, die ein Langloch aufweist, durch das die Schraube geführt ist, bereitzustellen, die einen verminderten Materialeinsatz erfordert. Gemäß der Erfindung wird diese Aufgabe durch eine Schraubensicherungsscheibe mit den Merkmalen des kennzeichnenden Teils des Patentanspruchs 1 gelöst.

Mit der Erfindung ist eine Schraubensicherungsscheibe zur Anordnung zwischen einem Schraubenkopf einer Schraube und einer ebenen Unterlage, die ein Langloch aufweist, durch das die Schraube geführt ist, bereitgestellt, die einen verminderten Materialeinsatz erfordert. Dadurch, dass die Scheibenoberseite des Scheibenkörpers außen mit einem umlaufenden Steg versehen ist, ist eine Durchbiegung des Scheibenkörpers auch bei geringerer Dicke verhindert.

In Weiterbildung der Erfindung geht der Außenrand des Scheibenkörpers absatzlos in den umlaufenden Steg über. Hierdurch ist eine gleichmäßige Kraftaufnahme durch den Steg über den Scheibenkörper erzielt.

In Ausgestaltung der Erfindung geht die Scheibenoberseite in Querschnittsbetrachtung bogenförmig in den Steg über. Hierdurch sind Kerbwirkungen vermiesen, wodurch eine gleichmäßige Krafteinleitung in den Steg weiter unterstützt ist.

In weiterer Ausgestaltung der Erfindung weist der umlaufende Steg auf seiner Innenseite eine Hohlkehle auf. Hierdurch sind Kerbwirkungen verhindert, die zu einer ungleichmäßigen Kraftaufnahme des Scheibenkörpers führen können.

In Weiterbildung der Erfindung geht die Scheibenunterseite bogenförmig in den Außenrand über. Hierdurch ist eine kufenartige Auflage des Sicherungselementes im nichtverspannten Zustand erzielt, durch die eine gleitende Verschiebung im Zuge der Verspannung des Sicherungselementes entlang der Auflagefläche erzielt ist.

In Ausgestaltung der Erfindung die Scheibenoberseite und/oder die Scheibenunterseite des Scheibenkörpers mit einem Sperrkantprofil versehen. Hierdurch ist eine Drehhemmung des Scheibenkörpers erzielt. Bevorzugt ist das Sperrkantprofil durch wenigstens zwei konzentrische Anordnungen von ringförmig aneinandergereihten Keilkörpern gebildet.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische räumliche Darstellung einer Schraubensicherungsscheibe;
- Figur 2: die Darstellung der Schraubensicherungsscheibe aus Figur 1 in der Draufsicht;
- Figur 3: die schematische räumliche Darstellung eines Abschnitts der Sicherungsscheibe aus Figur 1, und
- Figur 4: eine weitere schematische räumliche Darstellung eines Abschnitts der Sicherungsscheibe aus Figur 1.

Die als Ausführungsbeispiel gewählte Schraubensicherungsscheibe ist aus Federstahl hergestellt und umfasst einen ringförmig ausgebildeten, konvex ausgebildeten Scheibenkörper 1, mit einer Materialdicke von 2,1 mm. Alternativ kann die Schraubensicherungsscheibe auch aus Edelstahl hergestellt sein. Der Scheibenkörper 1 hat eine Scheibenoberseite 2, eine Scheibenunterseite 3 sowie einen Außenrand 4. Auf der Scheibenoberseite 2 ist außen umlaufend ein Steg 5 angeordnet, der mit dem Scheibenkörper 1 einstückig ist. Dabei geht der Außenrand 4 absatzlos unmittelbar in den Steg 5 über, dessen Außenfläche mit der Außenrandfläche eine gemeinsame Ebene ausbildet.

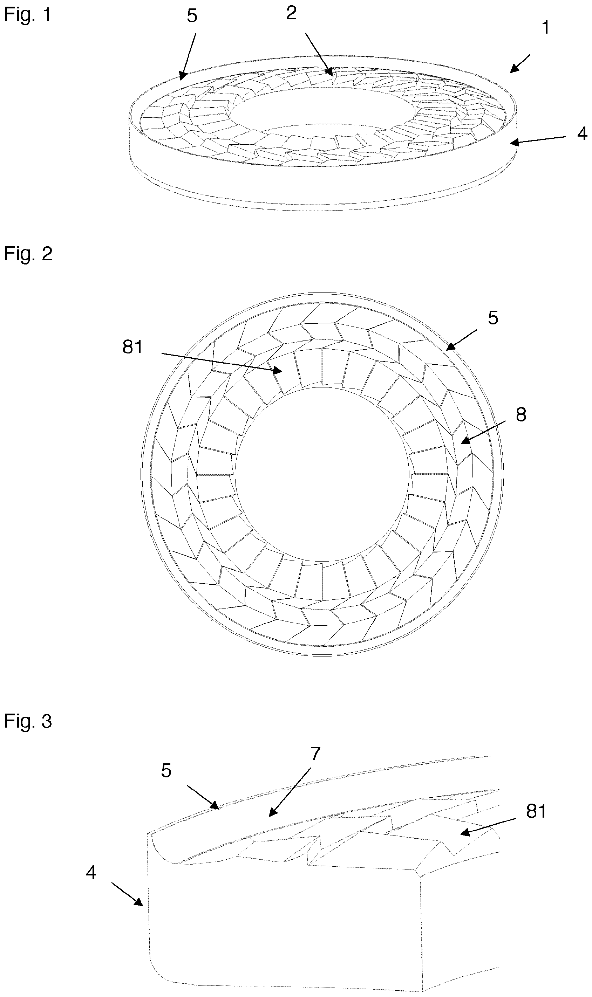

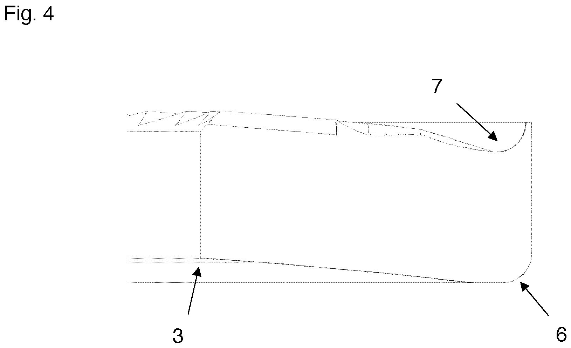

In einer Querschnittsbetrachtung geht die Scheibenunterseitenfläche bogenförmig in die Außenrandfläche über, wodurch eine umlaufende Kufe 6 gebildet ist. Weiterhin geht die Scheibenoberseitenfläche in Querschnittsbetrachtung bogenförmig in den Steg 5 über, der im Ausführungsbeispiel auf einer Innenseite eine Hohlkehle 7 aufweist (vgl. Figuren 3 und 4).

In die Scheibenoberseite 2 ist ein Sperrkantprofil 8 eingebracht, das durch vier konzentrische Anordnungen von ringförmig aneinander gereihten Keilkörpern 81 gebildet ist.

In einem Versuch wurde das Verhalten der so ausgebildeten Schraubensicherungsscheibe dem Verhalten einer Spannscheibe nach DIN 6796 - 2009-08 mit einer Materialdicke von 2,5 mm gegenübergestellt:
Es wurde ein mit einem Langloch versehenes Prüfblech mit einer Dicke von 2 mm beidseitig mit einer Spannscheibe mit einer Materialstärke von 2,5 mm nach DIN 6796 - 2009-08 mittels einer durch das Langloch und die beiden Spannscheiben geführte Schraube verschraubt.

Ein identisches Prüfblech wurde beidseitig mit einer erfindungsgemäßen Sicherungsscheibe mit einer Materialstärke von 2,1 mm mittels einer durch das Langloch und die beiden Sicherungsscheiben geführte Schraube verschraubt.

Die Verschraubung erfolgte gemäß DIN 25201-3 - 2015-12 jeweils mit einer Vorspannkraft von 31 KN. Anschließend wurde mittels Fühlerlehre jeweils der Abstand der beiden Scheiben einer jeden Verschraubung gemessen. Zwischen den beiden Spannscheiben betrug der Spalt 1,65 mm. Bei der erfindungsgemäßen Sicherungsscheibe betrug der Abstand 1,75 mm. Danach ergibt sich, dass die Spannscheibe - trotz der höheren Materialdicke - eine höhere Durchbiegung als die erfindungsgemäße Sicherungsscheibe aufweist.

## Patentansprüche

1. Schraubensicherungsscheibe zur Anordnung zwischen einem Schraubenkopf einer Schraube und einer ebenen Unterlage, die ein Langloch aufweist, durch das die Schraube geführt ist, mit einer Scheibenoberseite (2) und einer der Unterlage zugewandten Scheibenunterseite (3), wobei der Scheibenkörper (1) konvex ausgebildet ist, **dadurch gekennzeichnet, dass** die Scheibenoberseite (2) des Scheibenkörpers (1) außen mit einem umlaufenden Steg (5) versehen ist.

2. Schraubensicherungsscheibe nach Anspruch 1, **dadurch gekennzeichnet, dass** der Außenrand (4) des Scheibenkörpers (1) absatzlos in den umlaufenden Steg (5) übergeht.

3. Schraubensicherungsscheibe nach Anspruch 1 oder 2, **dadurch gekennzeichnet, dass** die Scheibenoberseite (2) in Querschnittsbetrachtung bogenförmig in den Steg (5) übergeht.

4. Schraubensicherungsscheibe nach einem der vorgenannten Ansprüche, **dadurch gekennzeichnet, dass** der umlaufende Steg (5) auf seiner Innenseite eine Hohlkehle (7) aufweist.

5. Schraubensicherungsscheibe nach einem der vorgenannten Ansprüche, **dadurch gekennzeichnet, dass** die Scheibenunterseite (3) in Querschnittsbetrachtung bogenförmig in den Außenrand (4) übergeht.

6. Schraubensicherungsscheibe nach einem der vorgenannten Ansprüche, **dadurch gekennzeichnet, dass** die Scheibenoberseite (2) und/oder die Scheibenunterseite (3) des Scheibenkörpers (1) mit einem Sperrkantprofil (8) versehen ist.

7. Schraubensicherungsscheibe nach Anspruch 6, **dadurch gekennzeichnet, dass** das Sperrkantprofil (8) durch wenigstens zwei konzentrische Anordnungen von ringförmig aneinandergereihten Keilkörpern (81) gebildet ist.
